# FASCICULE DE BREVET EUROPEEN

(11) **EP 1 317 162 B1**
(45) Date de publication et mention de la délivrance du brevet: **18.03.2015**
(21) Numéro de dépôt: 02292860.0
(22) Date de dépôt: 18.11.2002
(51) Int. Cl.: H04Q 11/00, H04B 10/272

(54) **Interface dorsale pour véhicule spatial et réseau de communication comprenant une telle interface**
Rückgrat Schnittstelle für Raumfahrzeug und Kommunikationsnetz mit einer solchen Schnittstelle
Backbone interface for a spacial vehicle and communication network comprising such interface

(30) Priorité: 27.11.2001 FR 0115302
(43) Date de publication de la demande: 04.06.2003
(73) Titulaire: ALCATEL LUCENT, 92100 Boulogne-Billancourt (FR)
(72) Inventeur: Gayrard, Jean-Didier, 31100 Toulouse (FR); Sotom, Michel, 31000 Toulouse (FR); Maignan, Michel, 31860 Pins Justaret (FR)
(74) Mandataire: Esselin, Sophie

(56) Documents cités:
- EP-A- 0 954 128
- JIAN-GUO ZHANG: "High-capacity avionics optical fiber information exchange networks" AEROSPACE AND ELECTRONICS CONFERENCE, 1993. NAECON 1993., PROCEEDINGS OF THE IEEE 1993 NATIONAL DAYTON, OH, USA 24-28 MAY 1993, NEW YORK, NY, USA,IEEE, US, 24 mai 1993 (1993-05-24), pages 204-210, XP010115947 ISBN: 0-7803-1295-3
- MCMAHON D H: "DOING WAVELENGTH-DIVISION MULTIPLEXING WITH TODAY'S TECHNOLOGY" IEEE LTS. THE MAGAZINE OF LIGHTWAVE COMMUNICATION SYSTEMS, IEEE INC. NEW YORK, US, vol. 3, no. 1, 1 février 1992 (1992-02-01) , pages 40-44,47-50, XP000248644

## Description

La présente invention se rapporte au domaine des interfaces de communication pour un véhicule spatial.

Elle concerne plus particulièrement une interface dorsale de communication entre au moins trois membres d'un réseau de communication pour un véhicule spatial.

Elle concerne également une interface terminale de communication pour un de ces membres.

Elle concerne encore un réseau de communication entre au moins trois membres pour un véhicule spatial.

A bord d'un véhicule spatial tel qu'un satellite sont embarqués de nombreux équipements électroniques tels que des amplificateurs, des récepteurs, des filtres, etc.Ces équipements, souvent redondants pour des raisons de fiabilité, appartiennent par exemple au système de transmission de signaux télévisés ou téléphoniques par satellite, ou bien aux systèmes assurant les fonctions de service à bord du satellite (gestion de bord, pilotage, alimentation, etc).

Lors du lancement du satellite, une configuration de fonctionnement nominale est choisie, c'est-à-dire que l'on a sélectionné un certain nombre d'équipements pour les fonctions de service, un certain nombre de canaux pour la transmission de signaux téléphoniques et un certain nombre de canaux pour la transmission de signaux télévisés. Au cours de la vie du satellite, et pour des raisons commerciales notamment, il se peut que cette configuration soit modifiée. Afin de reconfigurer les équipements pour satisfaire à la demande, les stations de commande et de contrôle au sol émettent par voie hertzienne des signaux de télécommande (TC) transmis à un récepteur se trouvant à bord du satellite et les envoyant à une Unité Centrale numérique UC de contrôle constituée d'une unité de traitement de ces signaux appelée CTU ("Control Terminal Unit") et de plusieurs unités de transmission appelées RTA ("Remote Terminal Unit") chargées de transmettre ces signaux aux différents équipements. Les signaux de TC peuvent aussi servir à choisir parmi les équipements redondants ceux qui seront effectivement actifs, notamment au niveau des systèmes assurant les fonctions de service à bord du satellite. Les signaux de TC servent donc à contrôler et assurer la gestion du fonctionnement de l'ensemble des équipements électroniques embarqués à bord.

Il est par ailleurs toujours souhaitable d'effectuer des tests de contrôle, soit pour vérifier que les signaux de TC ont bien été exécutés, soit pour détecter depuis le sol des pannes éventuelles risquant de nuire au bon fonctionnement du satellite ou de perturber les signaux transmis. Les différents équipements émettent pour cela en direction de l'Unité Centrale des signaux de télémesure (TM), transmis aux stations au sol par des émetteurs adaptés se trouvant à bord du satellite et en relation avec l'Unité Centrale. Les signaux de TM peuvent être émis soit en réponse à des signaux de TC, soit de manière systématique pour le contrôle permanent de l'état des équipements embarqués.

La transmission des signaux de TM et de TC entre l'Unité Centrale et les différents équipements est effectuée de manière classique au moyen de liaisons filaires par l'intermédiaire de câbles ; l'ensemble des liaisons filaires destinées à la transmission des signaux de télécommande et de télémesure est appelé harnais TM-TC.

En plus de la transmission de ces signaux de télécommande TC et de télémesure et d'acquisition TM, les équipements de charges utiles et de plates-formes de satellites nécessitent également la disposition de signaux de référence fréquentielle ou temporelle (horloge), l'alimentation en énergie, etc.

Chaque type de signal est véhiculé par un réseau dédié et spécialisé à base de liaisons filaires. Tout comme le harnais TM-TC pour les signaux de servitude TM-TC, chaque réseau demande la conception, la réalisation et l'installation de harnais spécifiques.

Cependant, les harnais sont chers, lourds et différents pour chaque satellite. Les durées d'intégration sont longues : elles englobent une vérification des harnais fil par fil, une vérification des connecteurs contact par contact, un contrôle de chaque signal au montage de chaque équipement, des contrôles de la compatibilité électromagnétique.

Les solutions connues pour la réduction des harnais en masse et en nombre de liaisons existent sous les formes suivantes :
- en ce qui concerne les signaux de télécommande TC et de télémesure TM, une solution connue consiste à utiliser des bus numériques pour véhiculer, multiplexés dans le temps, les différents signaux numérisés destinés ou issus des différents équipements. Cette solution reste toutefois limitée et ne traite pas, par exemple, les cas des références fréquentielles (oscillateurs locaux radiofréquences) ou temporelles (horloge ou top de synchronisation) par exemple.
- en effet, les références fréquencielles OL (pour Oscillateur Local) et OUS (pour Oscillateur Ultra Stable) sont regroupées au sein de réseaux spécialisés en câble coaxial. Ces réseaux, outre leur masse importante, relient électriquement des équipements micro-ondes très sensibles, ce qui engendre de graves problèmes d'auto-compatibilité électromagnétique.

Il est également connu du document JIAN-GUO ZHANG : « high-capacity avionics optical fiber information exchange networks » Aerospace and Electronics Conference, 1993, NAECON, d'utiliser un réseau de fibres optiques pour assurer des communications entre des émetteurs et des récepteurs.

Le but de la présente invention est d'obtenir une interface dorsale de communication entre au moins trois membres groupés au sein d'un unique réseau de communication pour un véhicule spatial, qui puissent pallier les problèmes cités ci-dessus.

A cet effet, l'invention a pour objet une interface dorsale de communication entre au moins trois membres d'un réseau de communication pour un véhicule spatial, les membres étant décomposés entre un premier groupe d'au moins deux membres et un second groupe de membres, caractérisé en ce que l'interface comprend :
- des premiers moyens de conversion électro-optiques pour la conversion des signaux électriques reçus en entrée de l'interface en signaux optiques portés par des longueurs d'onde propres et/ou pour la conversion inverse d'un signal optique démultiplexé en signaux électriques à destination du premier groupe,
- des premiers moyens de multiplexage/démultiplexage pour former un signal optique multiplex en longueurs d'onde des signaux optiques convertis et/ou reçus, et/ou pour le démultiplexage d'un signal optique multiplex formant une pluralité de signaux optiques démultiplexés,
lesdits premiers moyens de multiplexage/démultiplexage étant aptes à être reliés, par une sortie de l'interface, à une liaison optique dudit réseau, celle-ci étant destinée au transport du signal multiplex de longueurs d'onde vers et/ou depuis au moins un membre du second groupe.

Selon un mode réalisation, le premier groupe comporte :
- des moyens de contrôle aptes à émettre un signal de télécontrôle pour le contrôle d'un équipement distant formant un membre du second groupe et/ou à recevoir un signal de télémesure de cet équipement,
- des moyens de références fréquentielles et/ou de phase et/ou temporelles aptes à émettre au moins un signal de référence fréquentielle et/ou de phase et/ou temporelle,
- des moyens pour émettre un signal de puissance.

Selon un mode réalisation, elle comprend des moyens de sélection des signaux électriques et/ou optiques reçus à prendre en compte pour former le signal multiplex.

Selon un mode réalisation, les moyens de sélection comprennent des moyens de commutation aptes à être commandés par des moyens de commande.

Selon un mode réalisation, l'interface comporte une pluralité de sorties chacune apte à être reliée à une liaison optique et chacune destinée à transporter une sélection respective de longueurs d'onde parmi celles correspondant aux signaux reçus et/ou émis par l'interface dorsale.

L'invention a également pour objet une interface terminale de communication pour un membre du second groupe selon l'une des revendications précédentes, caractérisé en ce qu'il comporte :
- des seconds moyens de multiplexage/démultiplexage aptes à sélectionner une longueur d'onde parmi la pluralité de longueurs d'onde formant le signal multiplex de longueurs d'onde reçu à une entrée de l'interface terminale,
- des seconds moyens de conversion électro-optiques pour la conversion dudit signal optique porté par ladite longueur d'onde sélectionnée en un signal électrique fourni audit membre du second groupe et/ou pour la conversion inverse d'un signal électrique fourni par ledit membre et porté par une longueur déterminée.

Selon un mode réalisation, les seconds moyens de multiplexage/démultiplexage comportent des premiers moyens de sous-filtrage pour la sélection de plusieurs longueurs d'onde parmi ladite pluralité de longueurs d'onde, et des seconds moyens de sous-filtrage pour la sélection d'une longueur d'onde parmi ces plusieurs longueurs d'onde.

Selon un mode réalisation, les seconds moyens de multiplexage/démultiplexage comportent une cascade de moyens de sous-filtrage dont le nombre est fonction du nombre de longueurs d'onde exploitées par ledit membre du second groupe.

Selon un mode réalisation, ledit signal électrique fourni audit membre du second groupe est un signal de télécontrôle et/ou ledit signal électrique fourni par ce membre est un signal de télémesure.

L'invention a encore pour objet un réseau de communication entre au moins trois membres pour un véhicule spatial, caractérisé en ce qu'il comporte une interface dorsale de communication selon l'invention et/ou une interface terminale de communication selon l'invention.

L'invention a encore pour objet un harnais pour un réseau de communication entre au moins trois membres d'un véhicule spatial, caractérisé en ce qu'il comporte au moins une liaison optique, du type d'une fibre optique, pour le transport d'un signal optique multiplex en longueurs d'onde correspondant à une pluralité de signaux analogiques et/ou numériques.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un mode de réalisation d'une interface dorsale selon l'invention,
- Figure 2a : une représentation schématique d'un filtre optique à trois ports et de son fonctionnement,
- Figures 2b et 2c : les représentations spectrales de deux modes de fonctionnement du filtre de la figure 2a,
- Figure 3 : une représentation schématique de la densité spectrale de puissance du signal optique véhiculé en sortie de l'interface dorsale,
- Figure 4a et 4b : des représentations schématiques respectivement d'un mode de réalisation d'une interface terminale de communication selon l'invention, et d'une variante.

Dans la suite, les éléments remplissant des fonctions identiques porteront les mêmes références à travers différentes figures.

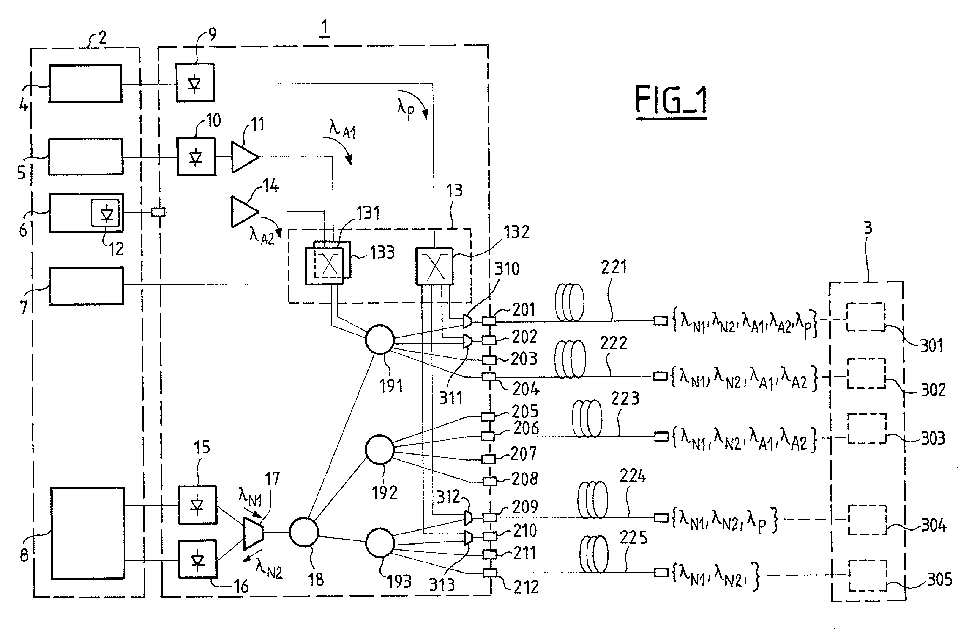

La figure 1 représente schématiquement une interface 1 dorsale selon l'invention. Cette interface 1 est interposée entre un premier groupe 2 d'éléments et un second groupe 3 d'éléments. Les éléments de ces deux groupes 2 et 3 peuvent être émetteurs et/ou récepteurs par rapport à l'interface dorsale 1 interposée entre ces deux groupes.

Le premier groupe 2 comporte en premier lieu quatre émetteurs : un premier émetteur consiste en un dispositif 4 source de puissance, un second dispositif 5 émetteur consistant en une source de signal analogique correspondant à une première référence, par exemple fréquentielle (du type d'un Oscillateur Ultra Stable, pour des applications nécessitant une haute précision de fréquence), un second dispositif 6 source d'un second signal analogique (du type d'un oscillateur local centralisé, dit MLO pour "Master Local Oscillator" en anglais), et un dispositif 7 de commande de commutateur, lequel commutateur sera explicité par la suite. Les quatre dispositifs émetteurs précités seront dénommés respectivement dorénavant source de puissance, première et seconde source de signal analogique, et contrôleur de commutateur.

Les quatre émetteurs sont donc reliés à leur sortie respective à une entrée correspondante de l'interface 1.

Le premier groupe 2 comporte également une unité centrale numérique 8 qui est un émetteur-récepteur. Cette unité 8 est en l'occurrence un contrôleur TM/TC (par exemple un RTA). Ce contrôleur 8 est relié par l'une de ces sorties à une entrée correspondante de l'interface dorsale 1 pour transmettre des signaux de télécontrôle. Il est également relié par l'une de ces entrées à une sortie de l'interface 1 dorsale pour en recevoir des signaux de télémesure TM.

L'entrée reliée à la source 4 de puissance et recevant le signal de puissance fournit ce dernier à un émetteur 9 optique de puissance. Cet émetteur 9, de technologie à diode laser par exemple, a pour fonction de convertir le signal analogique de puissance reçu à son entrée en un signal optique de puissance affecté d'une longueur d'onde λp. De même, l'entrée reliée à la première source 5 de signal analogique reçoit ce signal analogique et le fournit à l'entrée d'un second émetteur 10 optique analogique. Cet émetteur 10 a pour fonction de convertir le signal analogique à son entrée en un signal optique affecté, lui, d'une longueur d'onde λA1. Ce signal optique d'une longueur d'onde λA1 est amplifié à la sortie de l'émetteur 10 par un amplificateur 11 optique, connu en soi.

Par contre, l'entrée reliée à la seconde source 6 reçoit directement un signal optique. En effet, la seconde source 6 comporte un émetteur intégré 12 convertissant un signal analogique en un signal optique en sortie. De ce fait, le signal fourni en sortie de la source 6 est optique. Celui-ci est amplifié par un amplificateur 14 optique de l'interface.

Les trois signaux optiques de longueurs d'onde respectives λp, λA1 et λA2 sont alors fournis à des entrées respectives d'un ensemble 13 de commutation optique, dit par la suite commutateur 13 optique. Ce commutateur optique est commandé par le contrôleur 7 de commutateur.

Le commutateur 13 optique comporte trois sous-commutateurs 131, 132, 133. Ces sous-commutateurs optiques ont pour fonction de commuter le signal pourvu à leur entrée respective à l'une de leurs sorties. En l'occurrence, chaque sous-commutateur 131 et 133 comporte deux liaisons de sortie. Les deux liaisons de sortie du sous-commutateur 131 peuvent véhiculer un signal optique de longueur d'onde λA2, celles du sous-commutateur 133 pouvant véhiculer un signal optique de longueur d'onde λA1. Par contre, le sous-commutateur 132 comporte quatre liaisons de sortie. Ces quatre liaisons de sortie du sous-commutateur 132 peuvent véhiculer un signal optique de longueur d'onde λp.

Bien entendu, le fonctionnement d'un sous-commutateur est tel que l'une ou plusieurs des liaisons de sortie véhiculeront le signal d'entrée.

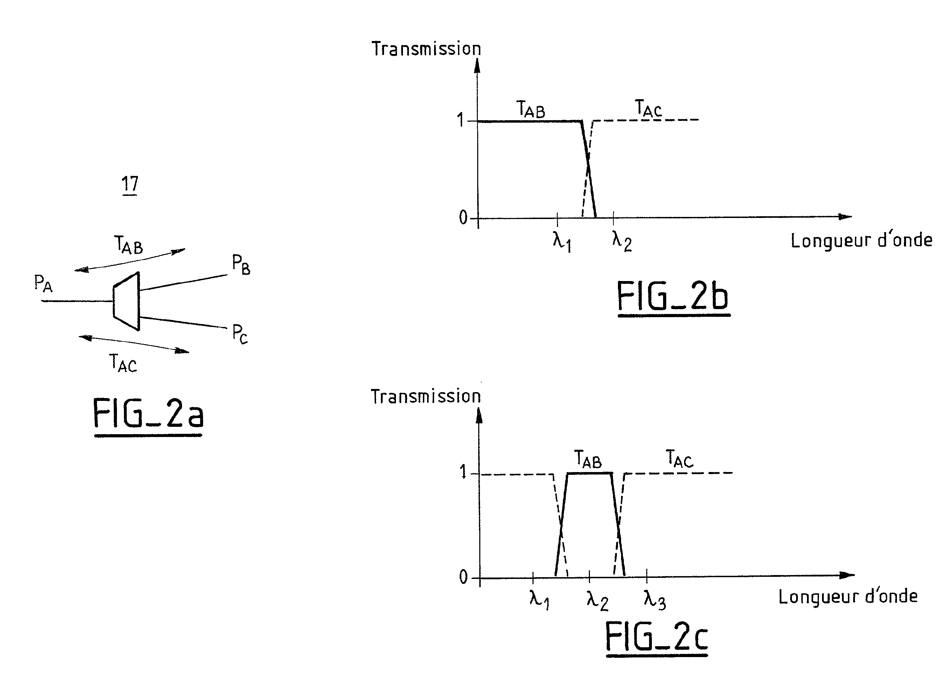

Le signal numérique TC délivré par le contrôleur 8 TM/TC reçu par une entrée de l'interface 1 est fourni à une entrée d'un émetteur 15 optique numérique, par exemple à diode laser, alors que le signal numérique TM provient d'un récepteur 16 optique numérique, par exemple à photo-diode, ayant reçu le signal TM optique à son entrée. Ces deux derniers émetteur 15 et récepteur 16 optiques sont reliés, l'un par sa sortie et l'autre par son entrée, à un multiplexeur/démultiplexeur 17 optique, ou filtre à trois ports. Le principe de fonctionnement d'un tel filtre 17 est illustré sur les figures 2a à 2c.

La figure 2a permet d'illustrer les transmissions entre les trois liaisons reliées aux trois ports du filtre. Ainsi, les transmissions TAB et TAC entre les ports A et C, et A et C sont permises, et ce de façon bidirectionnelle. Cependant, aucune communication n'est permise entre les ports B et C.

Les figures 2b et 2c sont relatives à différentes configurations du filtre à trois ports. Pour la figure 2b, le gabarit du filtre correspond à celui d'un passe-bas. Sur la liaison TAB, le filtre conserve les longueurs d'onde basses jusqu'à λ1 par valeurs supérieures et coupe la bande restante. Ainsi, la liaison TAC véhiculant la longueur d'onde λ2 supérieure à λ1, n'est pas transmise.

Par contre, pour la figure 2c, le gabarit du filtre correspond à celui d'un passe-bande. Sur la liaison TAB, le filtre conserve les longueurs d'onde autour de λ2 et coupe les bandes latérales restantes. De cette sorte, la liaison TAC, comportant la longueur d'onde λ3, est coupée.

Le port central du filtre 17 recevant une liaison optique véhiculant λN1 et λN2, correspondant respectivement aux signaux de TC et TM est lié à une entrée/sortie d'un coupleur 18 optique, également appelé répartiteur optique. Ce coupleur 18 est en liaison avec respectivement trois coupleurs 191, 192 et 193. Le premier coupleur 191 est en liaison également avec une des liaisons de sortie des deux commutateurs 131 et 133. De même, le second coupleur 192 est en liaison avec l'autre des liaisons de sortie des deux commutateurs 131 et 133.

L'interface 1 comporte douze entrées/sorties référencées 201 à 212 sous forme de connecteurs optiques, dans le sens du haut vers le bas. A chacune de ces entrées/sorties peut correspondre une fibre optique pour la transmission d'un signal optique vers un équipement distant membre du groupe 3. Sur la figure 1, il a été illustré cinq fibres 221 à 225 respectivement reliée à une entrée et/ou sortie d'un équipement 301 à 305 du second groupe 3 d'éléments.

La connexion entre d'une part les sorties du commutateur 13 et des coupleurs 191 à 193 et d'autre part les entrées/sorties 201 à 212, sont réalisées de la manière suivante :
Le répartiteur 191 et le commutateur 132 sont combinés, via un multiplexeur 310, au connecteur 201. Une seconde liaison de sortie du commutateur 132 et du répartiteur 191 sont combinées via un second multiplexeur 311 au connecteur 202. Les connecteurs 203 et 204 sont directement connectés au coupleur 191.

Les connecteurs 205 à 208 sont, eux, directement reliés au coupleur 192.

Le répartiteur 193 et le commutateur 132 sont combinés, via un multiplexeur 312, au connecteur 209. Une quatrième liaison de sortie du commutateur 132 est combinée au répartiteur 191 via un multiplexeur 313 au connecteur 210. Les connecteurs 211 et 212 sont directement connectés au coupleur 191.

Selon la configuration du système qui vient d'être décrite, il est alors possible, comme illustré sur la figure 1, de véhiculer les longueurs d'onde λN1, λA1, λA2, et λp de l'interface 1 en direction de l'équipement 301 par le connecteur 201, alors que la longueur d'onde λN2 sera véhiculée de l'équipement vers le module de contrôle 8. Cette longueur d'onde λN2 peut être représentative de l'information de TM mais on peut imaginer tout autre type d'informations de retour de l'équipement vers le premier groupe 2.

De même, la fibre 222 portera les longueurs d'onde λN1, λN2, λA1 et λA2, de même que la fibre 223. Enfin la fibre 224 portera les longueurs d'onde λN1, λN2, λp et la fibre 225, elle, les longueurs d'onde λN1 et λN2.

Il est remarquable que l'un des avantages qui ressort à la lecture de la description de la figure 1 est la capacité, grâce à l'invention, de réunir toutes les fibres optiques au sein d'un même harnais à fibres optiques et de choisir, pour chaque fibre de ce harnais, un multiplex de longueurs d'onde qui peut être différent d'une fibre à l'autre. Ce multiplex "personnalisé" à chaque fibre est formé grâce aux moyens offerts par l'interface 1 et par les commandes issues de l'équipement 7.

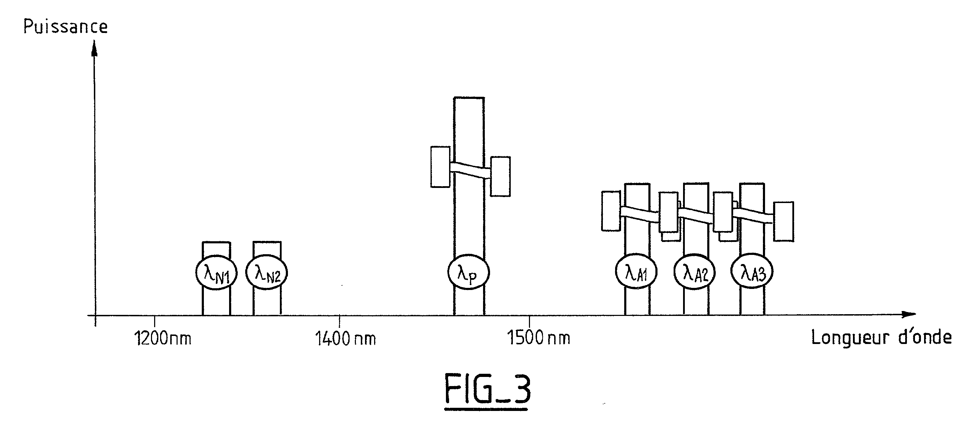

La figure 3 illustre un mode de réalisation d'allocation des signaux fournis à des équipements, qu'on pourrait apparenter à une allocation de « services » aux équipements en longueurs d'onde. Ainsi, on peut voir, dans cet exemple de réalisation, que les signaux numériques TC et TM, qui ont été affectés d'une longueur d'onde respective λN1, λN2, ont été agencés dans des fenêtres spectrales dans la bande [1200nm ;1400nm]. Le signal de puissance affecté de la longueur d'onde λp a été, lui, agencé dans la bande [1400nm ;1500nm] alors que les signaux analogiques ont été affectés des longueurs d'onde λA1, λA2, λA3 supérieures à 1500nm. Bien entendu, cette allocation n'est qu'un mode de réalisation.

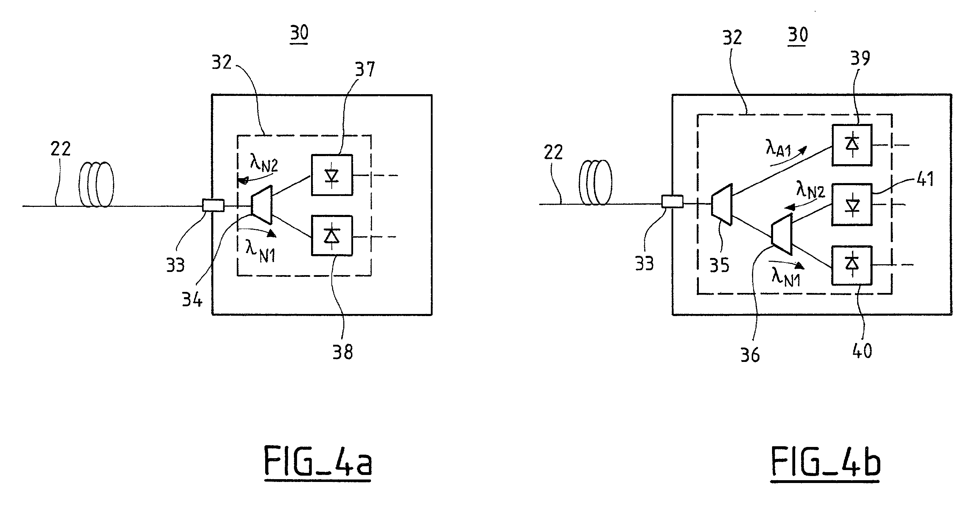

Les figures 4a et 4b représentent un mode de réalisation, et sa variante, d'une interface 32 terminale de communication disposée à l'extrémité des fibres 221 à 225.

Sur la figure 4a, l'équipement 30 ne nécessite que la réception de l'information TC et l'émission de l'information TM en direction du module de contrôle. A cette fin, un connecteur 33 optique de l'équipement connecte l'extrémité de la fibre 22 avec une entrée/sortie de l'interface terminale 32. Cette entrée/sortie est reliée à un port principal d'un multiplexeur/demultiplexeur ou filtre 34 à trois ports (sur le principe du filtre 17). Les deux autres ports de dégroupage sont acheminés respectivement, l'un à un récepteur 38 optique numérique, pour la récupération du signal numérique TC associé à la longueur d'onde λN1, et l'autre à un émetteur 37 numérique optique apte à transmettre le signal numérique TM sur la longueur d'onde λN2.

La figure 4b illustre une variante de la figure précédente pour la récupération du signal analogique de la première source associée à la longueur d'onde λA1. Le connecteur 33 est relié à un premier filtre à trois ports 35qui transporte sur l'un de ses ports secondaires de dégroupage la longueur d'onde λA1 et sur l'autre λN1 et λN2. La voie transportant λA1 est reliée à l'entrée d'un récepteur 39 optique analogique pour la récupération et le traitement ultérieur du signal analogique de la première source. La seconde voie est reliée à un second filtre 36 à trois ports (analogue au filtre 34) dont un port de dégroupage est relié à l'entrée d'un récepteur 40 optique numérique pour la récupération du signal TC. L'autre port est relié à un émetteur 41 numérique optique apte à transmettre le signal numérique TM sur la longueur d'onde λN2.

Ainsi, on réalise que l'interface 32 peut comprendre une cascade de filtres à trois ports dont le nombre est fonction du nombre de signaux transmis sur la fibre 22.

Cependant, il est évident que l'utilisation de filtres à trois ports n'est pas limitative pour l'invention et on peut imaginer tout autre moyen équivalent remplissant sa fonction de multiplexage/démultiplexage.

Le principe du transport sur fibre optique en multiplexage par longueurs d'onde, tel qu'il a été présenté ci-dessus est utilisable pour différents signaux :
- bus de données numériques sériel bidirectionnel (par exemple OBDH),
- télécommande ou contrôle (TC): signaux numérisés et sérialisés,
- télémesure ou acquisition (TM): signaux numérisés et sérialisés,
- référence de fréquence: oscillateurs locaux hyperfréquences (de quelques centaines de MHz à quelques dizaines de GHz), oscillateurs ultra-stables (de quelques MHz à quelques centaines de MHz), etc,
- référence de phase: oscillateurs locaux (pour antenne active par exemple),
- référence de temps: signal d'horloge (de quelques MHz à quelques centaines de MHz), impulsions de synchronisation, etc,
- énergie: transport d'énergie sous forme de lumière (laser de puissance) pour alimenter : des équipements consommant peu (capteurs ou actuateurs déportés...), des parties d'équipement qui demandent une source d'énergie permanente (mémoire de sauvegarde, récepteur de commande en veille...), des circuits de commande de mise sous tension qui demandent de l'énergie d'activation, etc.

Les signaux qui ont été cités dans la présente demande ne sont bien sûr pas limitatifs en soi.

Cet ensemble de signaux peut être véhiculé intégralement sur une même fibre ou de façon sélective selon les besoins de chaque équipement. Cette sélection est réalisée par commande effectuée par le dispositif 7 de commande de commutateur. Cette commande peut être de toute sorte, programmée, manuelle ou distante.

On notera encore que, pour des raisons de fiabilité du système, les équipements et/ou les interfaces selon l'invention peuvent être au moins en partie dupliqués (redondés), et/ou être pourvus de moyens connus de sélection d'organes actifs de fiabilisation de systèmes.

Comme on le remarque à la lecture de la présente description, les avantages de la présente invention sont multiples et comprennent :
- une réduction de la masse. La masse du harnais à simple fibre optique est plus faible que la somme des différents harnais filaires qu'il remplace,
- une réduction des coûts de développement et de fabrication. Il n'y a qu'un seul harnais à développer, fabriquer, tester et intégrer,
- une réduction du délai d'intégration du satellite. Il y a moins de points à tester (câble et connecteur) et de liaisons à intégrer par équipement,
- l'élimination des problèmes de compatibilité électromagnétique et les tests de contrôle. La fibre optique assure une totale compatibilité électromagnétique (émission et susceptibilité rayonnée, décharge électrostatique...) et assure une isolation galvanique totale.
- une standardisation et la banalisation des interfaces des équipements et du harnais.

## Revendications

1. Interface dorsale de communication entre au moins trois membres d'un réseau de communication pour un véhicule spatial, les membres étant décomposés entre un premier groupe (2) d'au moins deux membres (4-8) et un second groupe (3) de membres (301-305), **caractérisée en ce que** l'interface (1) comprend :
- des premiers moyens (9, 10, 15, 16) de conversion électro-optiques pour la conversion des signaux électriques analogiques et/ou des signaux électriques numériques, provenant des au moins deux membres du premier groupe (2) et reçus en entrée de l'interface, en signaux optiques portés par des longueurs d'onde propres (λp,λA1,λA2,λN1) et/ou pour la conversion inverse d'un signal optique démultiplexé en signaux électriques analogiques et/ou numériques à destination du premier groupe,
- des moyens de sélection (13) pour sélectionner, pour chaque membre du second groupe (3), parmi les signaux optiques portés respectivement par les longueurs d'onde propres (λp,λA1,λA2,λN1), un ensemble de signaux optiques convertis et/ou reçus à véhiculer de façon sélective vers ledit membre du second groupe (3),
- des premiers moyens (191,192,193,18,17) de multiplexage/démultiplexage pour former, pour chaque membre du second groupe (3), un signal optique multiplex en longueurs d'onde des signaux optiques convertis et/ou reçus sélectionnés, et/ou pour le démultiplexage d'un signal optique multiplex formant une pluralité de signaux optiques démultiplexés, lesdits premiers moyens de multiplexage/démultiplexage étant aptes à être reliés, par des entrées/sorties de l'interface, à des liaisons optiques dudit réseau, chaque liaison optique étant destinée au transport d'un signal optique multiplex de longueurs d'onde vers et/ou depuis l'un des membres du second groupe.

2. Interface dorsale selon la revendication 1, **caractérisée en ce que** le premier groupe comporte :
- des moyens (8) de contrôle aptes à émettre un signal (TC) de télécontrôle pour le contrôle d'un équipement (301-305) distant formant un membre du second groupe (3) et/ou à recevoir un signal de télémesure (TM) de cet équipement,
- des moyens (5, 6) de références fréquentielles et/ou de phase et/ou temporelles aptes à émettre au moins un signal de référence fréquentielle et/ou de phase et/ou temporelle,
- des moyens (4) pour émettre un signal de puissance.

3. Interface dorsale selon la revendication 2, **caractérisée en ce que** les moyens de sélection comprennent des moyens (13, 131, 132, 133) de commutation aptes à être commandés par des moyens (7) de commande.

4. Interface dorsale selon l'une des revendications précédentes, **caractérisée en ce que** l'interface comporte une pluralité de sorties (201-212) chacune apte à être reliée à une liaison optique (221-225) et chacune destinée à transporter une sélection respective de longueurs d'onde parmi celles (λp,λA1,λA2,λN1,λN2) correspondant aux signaux reçus et/ou émis par l'interface dorsale.

5. Réseau de communication entre au moins trois membres pour un véhicule spatial, **caractérisé en ce qu'**il comporte une interface dorsale de communication selon l'une des revendications 1 à 4.

6. Réseau de communication selon la revendication 5, **caractérisé en ce qu'**il comporte en outre une interface terminale de communication pour un membre (30) du second groupe, l'interface terminale comportant :
- des second moyens (34,35,36) de multiplexage/démultiplexage aptes à sélectionner une longueur d'onde parmi la pluralité de longueurs d'onde formant le signal multiplex de longueurs d'onde reçu à une entrée (33) de l'interface terminale,
- des second moyens (37,38,39,40) de conversion électro-optiques pour la conversion dudit signal optique porté par ladite longueur d'onde sélectionnée en un signal électrique fourni audit membre (30) du second groupe et/ou pour la conversion inverse d'un signal électrique fourni par ledit membre et porté par une longueur déterminée.

7. Réseau de communication selon la revendication 6, **caractérisé en ce que** les seconds moyens de multiplexage/démultiplexage comportent des premiers moyens (35) de sous-multiplexage/démultiplexage pour la sélection de plusieurs longueurs d'onde parmi ladite pluralité de longueurs d'onde, et des seconds moyens (36) de sous-multiplexage/démultiplexage pour la sélection d'une longueur d'onde parmi ces plusieurs longueurs d'onde.

8. Réseau de communication selon la revendication 7, **caractérisé en ce que** les seconds moyens de multiplexage/démultiplexage comportent une cascade de moyens de sous-multiplexage/démultiplexage dont le nombre est fonction du nombre de longueurs d'onde exploitées par ledit membre du second groupe.

9. Réseau de communication selon l'une des revendications 5 à 8, **caractérisé en ce que** ledit signal électrique fourni audit membre du second groupe est un signal de télécontrôle et/ou ledit signal électrique fourni par ce membre est un signal de télémesure.

## Patentansprüche

1. Kommunikative Rückgrat-Schnittstelle zwischen mindestens drei Mitgliedern eines Kommunikationsnetzwerks für ein Raumfahrzeug, wobei die Mitglieder auf eine erste Gruppe (2) von mindestens zwei Mitgliedern (4-8) und eine zweite Gruppe (3) von Mitgliedern (301-305) aufgeteilt sind, **dadurch gekennzeichnet, dass** die Schnittstelle (1) umfasst:
- erste elektrooptische Umwandlungsmittel (9, 10, 15, 16) für die Umwandlung der analogen elektrischen Signale und/oder der digitalen elektrischen Signale, die von den mindestens zwei Mitgliedern der ersten Gruppe (2) kommen und als Eingang von der Schnittstelle empfangen werden, in optische Signale, die von eigenen Wellenlängen (λp, λA1, λA2, λN1) getragen werden, und/oder für die umgekehrte Umwandlung eines demultiplexierten optischen Signals in analoge und/oder digitale elektrische Signale in Richtung der ersten Gruppe,
- Auswahlmittel (13), um für jedes Mitglied der zweiten Gruppe (3) aus den optischen Signalen, die jeweils von den eigenen Wellenlängen (λp, λA1, λA2, λN1) getragen werden, eine Gruppe konvertierter und/oder empfangener optischer Signale auszuwählen, die selektiv zu dem Mitglied der zweiten Gruppe (3) zu befördern sind,
- erste Multiplexier-/Demultiplexiermittel (191, 192, 193, 18, 17), um für jedes Mitglied der zweiten Gruppe (3) ein optisches Wellenlängen-Multiplexsignal aus den ausgewählten konvertierten und/oder empfangenen optischen Signalen zu bilden und/oder für die Demultiplexierung eines optischen Multiplexsignals, das eine Vielzahl demultiplexierter optischer Signale bildet,
wobei die ersten Multiplexier-/Demultiplexiermittel imstande sind, mittels Eingängen/Ausgängen der Schnittstelle mit optischen Verbindungen des Netzwerks verbunden zu sein, wobei jede optische Verbindung zum Transport eines optischen Wellenlängen-Multiplexsignals zu und/oder von einem der Mitglieder der zweiten Gruppe bestimmt ist.

2. Rückgrat-Schnittstelle nach Anspruch 1, **dadurch gekennzeichnet, dass** die erste Gruppe aufweist:
- Kontrollmittel (8), die imstande sind, ein Fernkontrollsignal (TC) für die Kontrolle einer entfernten Ausrüstung (301-305), die ein Mitglied der zweiten Gruppe (3) bildet, zu senden und/oder um ein Fernmesssignal (TM) dieser Ausrüstung zu empfangen,
- Frequenz- und/oder Phasen- und/oder Zeitreferenzmittel (5, 6), die imstande sind, mindestens ein Frequenz- und/oder Phasen- und/oder Zeitreferenzsignal zu senden,
- Mittel (4), um ein Leistungssignal zu senden.

3. Rückgrat-Schnittstelle nach Anspruch 2, **dadurch gekennzeichnet, dass** die Auswahlmittel Umschaltmittel (13, 131, 132, 133) umfassen, die imstande sind, von Steuermitteln (7) gesteuert zu sein.

4. Rückgrat-Schnittstelle nach einem der vorangehenden Ansprüche, **dadurch gekennzeichnet, dass** die Schnittstelle eine Vielzahl von Ausgängen (201-212) umfasst, die jeweils imstande sind, mit einer optischen Verbindung (221-225) verbunden zu sein und die jeweils dazu bestimmt sind, eine jeweilige Auswahl von Wellenlängen von denen (λp, λA1, λA2, λN1, λN2), die den von der Rückgrat-Schnittstelle empfangenen und/oder gesendeten Signalen entsprechen, zu transportieren.

5. Kommunikationsnetzwerk zwischen mindestens drei Mitgliedern für ein Raumfahrzeug, **dadurch gekennzeichnet, dass** es eine kommunikative Rückgrat-Schnittstelle nach einem der Ansprüche 1 bis 4 aufweist.

6. Kommunikationsnetzwerk nach Anspruch 5, **dadurch gekennzeichnet, dass** es ferner eine kommunikative Endschnittstelle für ein Mitglied (30) der zweiten Gruppe aufweist, wobei die Endschnittstelle aufweist:
- zweite Multiplexier-/Demultiplexiermittel (34, 35, 36), die imstande sind, aus der Vielzahl von Wellenlängen, die das empfangene Wellenlängen-Multiplexsignal bilden, das an einem Eingang (33) der Endschnittstelle empfangen wird, eine Wellenlänge auszuwählen,
- zweite elektrooptische Umwandlungsmittel (37, 38, 39, 40) für die Umwandlung des von der ausgewählten Wellenlänge getragenen optischen Signals in ein elektrisches, dem Mitglied (30) der zweiten Gruppe bereitgestelltes Signal und/oder für die umgekehrte Umwandlung eines von dem Mitglied bereitgestellten und von einer bestimmten Wellenlänge getragenen elektrischen Signals.

7. Kommunikationsnetzwerk nach Anspruch 6, **dadurch gekennzeichnet, dass** die zweiten Multiplexier-/Demultiplexiermittel erste Unter-Multiplexier-/Demultiplexiermittel (35) für die Auswahl mehrerer Wellenlängen aus der Vielzahl von Wellenlängen und zweite Unter-Multiplexier-/Demultiplexiermittel (36) für die Auswahl einer Wellenlänge aus diesen mehreren Wellenlängen aufweisen.

8. Kommunikationsnetzwerk nach Anspruch 7, **dadurch gekennzeichnet, dass** die zweiten Multiplexier-/Demultiplexiermittel eine Kaskade von Unter-Multiplexier-/Demultiplexiermitteln aufweisen, deren Anzahl von der Anzahl von von dem Mitglied der zweiten Gruppe verwendeten Wellenlängen abhängt.

9. Kommunikationsnetzwerk nach einem der Ansprüche 5 bis 8, **dadurch gekennzeichnet, dass** das dem Mitglied der zweiten Gruppe bereitgestellte elektrische Signal ein Fernkontrollsignal ist und/oder das von diesem Mitglied bereitgestellte elektrische Signal ein Fernmesssignal ist.

## Claims

1. A backbone communications interface between at least three members of a communications network for a space vehicle, the members being split between a first group (2) of at least two members (4-8) and a second group (3) of members (301-305), **characterised in that** the interface (1) comprises:
- first electro-optical conversion means (9, 10, 15, 16) for converting analogue electrical signals and/or digital electrical signals originating from the at least two members of the first group (2) and received as inputs to the interface into optical signals carried by specific wavelengths (λp, λA1, λA2, λN1) and/or for inversely converting a demultiplexed optical signal into analogue and/or digital electrical signals for the first group,
- selection means (13) for selecting, for each member of the second group (3), from the optical signals carried respectively by specific wavelengths (λp, λA1, λA2, λN1), a set of optical signals converted and/or received to be conveyed selectively to said member of the second group (3),
- first multiplexing/demultiplexing means (191, 192, 193, 18, 17) for forming, for each member of the second group (3), a wavelength division multiplexed optical signal from the selected converted and/or received optical signals, and/or for demultiplexing a multiplexed optical signal forming a plurality of demultiplexed optical signals,
said first multiplexing/demultiplexing means being suitable for being connected via inlets/outlets of the interface to optical connections of said network, each optical connection being intended for the conveyance of a wavelength division multiplexed optical signal to and/or from one of the members of the second group.

2. The backbone interface according to Claim 1, **characterised in that** the first group comprises:
- control means (8) suitable for sending a remote control signal (TC) for controlling a remote piece of equipment (301-305) forming a member of the second group (3) and/or for receiving a telemetry signal (TM) from this piece of equipment,
- frequency and/or phase and/or time reference means (5, 6) suitable for sending at least one frequency and/or phase and/or time reference signal,
- means (4) for sending a power signal.

3. The backbone interface according to Claim 2, **characterised in that** the selection means comprise switch means (13, 131, 132, 133) suitable for being controlled by control means (7).

4. The backbone interface according to any of the preceding claims, **characterised in that** the interface comprises a plurality of outlets (201-212), each suitable for being connected to an optical connection (221-225) and each serving to convey a respective selection of wavelengths from those (λp, λA1, λA2, λN1, λN2) corresponding to the signals received and/or sent by the backbone interface.

5. A communications network between at least three members for a space vehicle, **characterised in that** it comprises a backbone communications interface according to any of Claims 1 to 4.

6. A communications network according to Claim 5, **characterised in that** it further comprises a communications terminal interface for a member (30) of the second group, the terminal interface comprising:
- second multiplexing/demultiplexing means (34, 35, 36) suitable for selecting one wavelength from the plurality of wavelengths forming the wavelength division multiplexed signal received at an inlet (33) of the terminal interface,
- second electro-optical conversion means (37, 38, 39, 40) for converting said optical signal carried by said selected wavelength into an electrical signal supplied to said member (30) of the second group and/or for performing the inverse conversion of an electrical signal provided by said member and carried by a determined wavelength.

7. The communications network according to Claim 6, **characterised in that** the second multiplexing/demultiplexing means comprise first sub-multiplexing/demultiplexing means (35) for selecting a number of wavelengths from said plurality of wavelengths, and second sub-multiplexing/demultiplexing means (36) for selecting one wavelength from this number of wavelengths.

8. The communications network according to Claim 7, **characterised in that** the second multiplexing/demultiplexing means comprise a cascade of sub-multiplexing/demultiplexing means of which the number is a function of the number of wavelengths used by said member of the second group.

9. The communications network according to any of Claims 5 to 8, **characterised in that** said electrical signal supplied to said member of the second group is a remote control signal and/or said electrical signal supplied by this member is a telemetry signal.
